# FASCICULE DE BREVET EUROPEEN

(11) **EP 3 342 466 B1**
(45) Date de publication et mention de la délivrance du brevet: **21.08.2024**
(21) Numéro de dépôt: 16306835.6
(22) Date de dépôt: 28.12.2016
(51) Int. Cl.: A62C 2/06, A62C 2/12, A62C 2/24, F16L 5/04

(54) **DISPOSITIF COUPE-FEU DE TRAVERSEE D'UNE PAROI**
BRANDSCHUTZVORRICHTUNG ZUR DURCHFÜHRUNG DURCH EINE WAND
FIRE STOP DEVICE PASSING THROUGH A WALL

(43) Date de publication de la demande: 04.07.2018
(73) Titulaire: Soletanche Freyssinet, 92500 Rueil-Malmaison (FR)
(72) Inventeur: RAILLARD, Vincent, 73240 Avressieux (FR); SANGOUARD, Gilles, 69360 Simandres (FR)
(74) Mandataire: Plasseraud IP

(56) Documents cités:
- EP-A1- 0 524 078
- WO-A1-83/03552
- DE-A1- 10 060 252
- JP-A- 2006 071 264
- US-A- 4 857 364

## Description

L'invention concerne un dispositif coupe-feu de traversée d'une paroi, notamment pour permettre la traversée de la paroi par un fluide et/ou un câble électrique et/ou un conduit de fluide.

Un tel dispositif comprend généralement un manchon de traversée de paroi muni d'un corps principal et d'un orifice de passage, notamment pour le passage de fluide, et/ou câble électrique, et/ou conduit de fluide, ledit manchon étant configuré pour que le corps principal soit logé dans ladite paroi et l'orifice d'entrée soit disposé hors de la paroi.

Un volet obture l'orifice de passage par gravité de sorte qu'en position d'installation du dispositif dans la paroi, le volet ferme l'orifice.

Le volet d'obturation est avantageusement pourvu d'un bouchon en matériau intumescent.

Le dispositif coupe-feu permet qu'une porte entre deux zones reste fermée, les câbles et/ou conduits passant d'une zone à l'autre par le dispositif coupe-feu.

EP 0 524 078 A1 divulgue un dispositif coupe-feu pour assurer le passage au travers d'une paroi de séparation entre deux zones d'une installation, de câbles et/ou conduits souples d'alimentation en énergie électrique ou autre.

JP 2006 071264 A divulgue un dispositif de ventilation ayant un port de communication extérieur d'un conduit d'air et un matériau en mousse fixé sur celui-ci. Le matériau en mousse fond en cas d'incendie à proximité pour bloquer le port de communication extérieur.

DE 100 60 252 A1 divulgue un élément de protection contre l'incendie comportant un support métallique avec des ouvertures séparées par des nervures, qui en cas d'incendie assure l'étanchéité contre le feu et la fumée.

WO 83/03552 A1 divulgue une barrière coupe-feu pour traversées de tuyaux, dans laquelle, en cas d'incendie, un élément de fermeture coupe le tuyau et ferme la section ouverte du tuyau de manière étanche aux flammes.

En cas d'incendie, le feu progresse nettement plus difficilement, du fait de la fermeture de la porte d'une part et du gonflement du matériau intumescent dans le manchon d'autre part.

Toutefois, il n'est pas rare qu'un déréglage dans un système de ventilation des zones provoque une différence de pression entre les zones, ce qui gêne voire empêche l'utilisation de la porte.

De plus, en cas d'inondation interne dans une zone, la montée du niveau d'eau augmente vite puisque que le volet obture continûment l'orifice de passage du dispositif coupe-feu.

Le but de l'invention est de remédier à ces inconvénients.

L'invention est définie dans les revendication annexées.

Dans la présente description et les dessins, tous exemples ou descriptions techniques de dispositifs, produits et/ou des méthodes non couverts par les revendications sont à considérer comme représentatifs de l'état de la technique ou d'exemples utiles à la compréhension de l'invention.

En conditions normales d'utilisation, le dispositif selon la présente invention permet de maintenir en position ouverte l'orifice de passage, ce qui assure l'équipression de zones ou l'évacuation de fluides dont la paroi traversée par le dispositif fait interface.

Au contraire, en cas d'incendie, l'élément thermiquement fusible fond ; le volet d'obturation n'est plus maintenu en position ouverte et retombe par gravité sur l'orifice de passage, ce qui permet de retarder la progression du feu.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une vue en perspective d'un dispositif coupe-feu selon la présente invention, en condition normale d'utilisation ;
- la figure 2 illustre une vue en perspective du dispositif coupe-feu de la figure 1, en cas d'incendie ; et
- la figure 3 illustre une vue en coupe longitudinale du dispositif coupe-feu de la figure 2.

### Dispositif coupe-feu

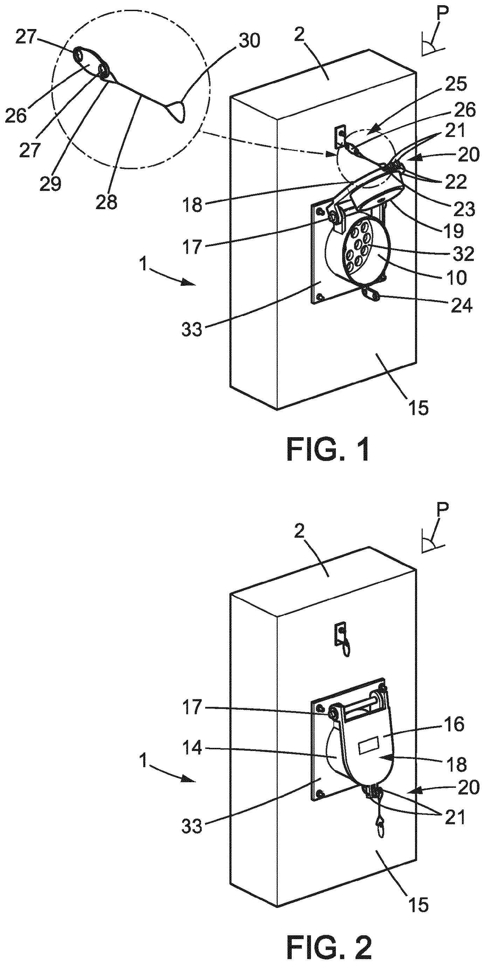

Comme visible sur la figure 1, l'invention a pour objet un dispositif coupe-feu de traversée d'une paroi, référencé 1 sur les figures.

Sur les figures 1 à 3, le dispositif coupe-feu 1 est illustré en position installé dans une paroi ou mur, référencée 2.

La paroi 2 fait frontière entre une première zone Z et une deuxième zone Z.

Le dispositif 1 permet la traversée de la paroi notamment par un fluide et/ou un câble électrique et/ou un conduit de fluide.

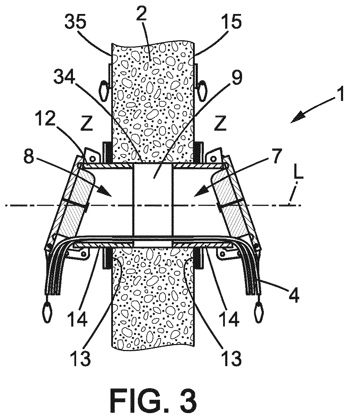

Sur la figure 3, un ensemble de câbles 4 traverse la paroi 2 via le dispositif 1.

Comme visible sur les figures 1 à 3, le dispositif 1 comprend un manchon 5 de traversée de la paroi 2.

Le manchon 5 comprend un corps principal et au moins un orifice de passage.

Sur le mode de réalisation illustré, et comme plus particulièrement visible à la figure 3, le manchon 5 comprend deux demi-fourreaux 7, 8 séparés par un intervalle 9 pour empêcher d'un pont thermique entre les deux demi-fourreaux 7, 8.

Chaque demi-fourreau 7, 8 est muni à l'une de ses extrémités d'un orifice 10 de passage de l'ensemble de câbles et/ou conduits 4.

L'invention va maintenant être décrite en détail relativement au demi-fourreau 7.

Bien entendu, le demi-fourreau 8 est de préférence identique au demi-fourreau 7, de sorte que la même description s'applique également au demi-fourreau 8.

Comme visible sur les figures 1 à 3, le demi-fourreau 7 comprend un corps principal 12 logé dans la paroi 2, l'orifice de passage 10 étant disposé hors de la paroi 2.

Le corps principal 12 comprend une partie 13 à l'intérieur de la paroi 2, tandis qu'une partie 14 fait saillie hors d'une face 15 de la paroi 2, dans la première zone Z.

Le corps principal 12 présente une forme générale cylindrique s'étendant dans une direction principale L.

Le demi-fourreau 7 comprend également un volet 16 d'obturation de l'orifice de passage 10 par gravité.

Le volet 16 est mobile entre une position d'ouverture de l'orifice de passage 10, illustrée sur la figure 1 et une position de fermeture de l'orifice de passage 10, illustrée sur la figure 2.

Comme particulièrement visible sur les figures 1 et 2, le demi-fourreau 7 comprend une tige 17 de pivotement du volet 16 entre la position d'ouverture et la position de fermeture.

La tige 17 s'étend dans une direction parallèle à un plan P de la face 15.

La tige 17 est disposée en regard de la partie externe 14 du corps principal 13.

En position installé dans la paroi 2, la tige 17 est montée au-dessus du corps principal 13, ce qui assure que la position stable du volet d'obturation 16 est la position de fermeture, tandis que la position ouverte n'est jamais stable.

Le volet d'obturation 16 comprend un couvercle 18 sur lequel repose un bouchon 19.

Le bouchon 19 est constitué d'un matériau intumescent.

Comme visible sur les figures 1 à 3, le bouchon 19 est disposé de sorte à boucher l'orifice de passage 10 en position de fermeture du volet 16.

Le couvercle 18 comprend une fourche 20 munie de deux dents 21 espacées l'une de l'autre, diamétralement opposée à la tige 17.

Les dents 21 sont chacune perforées d'un trou 22.

Un barreau 23 traverse les deux trous 22, l'une au moins des extrémités du barreau 23 en faisant saillie hors des trous 22.

Le dispositif coupe-feu 1 comprend un doigt 24 solidaire de la partie externe 14 et disposé en regard de la fourche 20 de sorte qu'en position de fermeture, les dents 21 de la fourche 20 soient disposées de part et d'autre du doigt 24.

Comme il ressort particulièrement de la figure 1, le dispositif coupe-feu 1 comprend un organe de commande 25 de la position du volet d'obturation 16.

L'organe de commande 25 comprend un élément thermiquement fusible 26, autrement appelé fusible thermique.

Le fusible thermique 26 est disposé de sorte à maintenir le volet en position d'ouverture.

Comme plus particulièrement visible sur la figure 1, le fusible thermique 26 comprend deux extrémités, chacune étant perforée respectivement d'un trou 27.

Une chaîne 28 relie le fusible thermique 26 au volet 16.

Une extrémité 29 de la chaîne 28 est solidaire du fusible thermique 26, tandis qu'une extrémité 30 de la chaîne 28 est solidaire du barreau 23.

Un arceau 31 passe dans l'autre trou 27 pour solidariser le fusible thermique 26 à la face 15 de la paroi 2.

Comme visible sur la figure 1, le fusible thermique 26 solidaire du volet d'obturation 16 maintient le volet d'obturation 16 en position d'ouverture de l'orifice de passage 10.

Comme visible sur la figure 2, une fois que le fusible thermique 26 a fondu, en cas d'incendie, le volet n'est plus maintenu en position ouverte et retombe en position stable, c'est-à-dire en position de fermeture de l'orifice de passage 10.

Comme visible sur la figure 1, le dispositif coupe-feu comprend une grille 32 dans le corps principal 13 du demi-fourreau 7.

La grille 32 est montée sensiblement orthogonalement à la direction L.

De préférence, la grille 32 comprend un revêtement de protection anti-feu.

Le revêtement de protection anti-feu comprend préférentiellement au moins une couche de colle réfractaire.

La colle réfractaire comprend de manière connue des éléments actifs qui libèrent de l'eau lorsque la température s'élève, par exemple au-dessus de 80°C. En se vaporisant à 100°C, cette eau ralentit la propagation de la chaleur du côté extérieur (chaud) du revêtement vers son côté intérieur (froid). On peut notamment utiliser une colle dite F.active, à base d'hydrates d'oxydes métalliques.

Avantageusement, la grille comprend au moins une couche de matériau incombustible de type silicate de calcium.

La couche de matériau incombustible est en contact du revêtement de protection anti-feu.

On note qu'avantageusement des trous de la grille 32 sont suffisamment petits pour ne pas laisser passer une pige lors d'essais au feu.

Comme visible sur les figures 1 et 2, le dispositif coupe-feu 1 comprend un support 33 de fixation du demi-fourreau 7 à la face 15 de la paroi 2, une plaque de matériau intumescent (non visible) formant joint entre le support de fixation 33 et la face 15.

L'invention est maintenant décrite en relation avec les deux demi-fourreaux 7, 8.

Comme déjà indiqué, la description du demi-fourreau 8 est analogue à celle du demi-fourreau 7.

On note que le corps principal 12 du demi-fourreau 8 s'étend dans le prolongement du corps principal 12 du demi-fourreau 7.

En d'autres termes, chacun des cylindres 12 s'étend dans la même direction principale L.

Les demi-fourreaux 7, 8 sont enfoncés dans un carottage 34 de la paroi 2, le demi-fourreau 7 débouchant dans la face 15 (comme déjà décrit), tandis que le demi-fourreau 8 débouche dans une face 35 de la paroi 2 et opposée de la face 15.

L'ensemble 4 de câbles et/ou conduits pénètre le demi-fourreau 7 par l'orifice de passage 10, traverse le corps principal 13 du demi-fourreau 7, l'intervalle 9 puis le corps principal 12 du demi-fourreau 7 et sort du dispositif coupe-feu 1 par l'orifice de passage 10 du demi-fourreau 8.

### Fonctionnement du dispositif coupe-feu

En position d'utilisation normale du dispositif coupe-feu 1, c'est-à-dire quand le dispositif coupe-feu 1 est installé dans la paroi 2 et qu'aucun incendie n'a lieu, chaque volet 16 est en position d'ouverture de l'orifice de passage associé 10.

Dans cette position, l'air traverse le dispositif coupe-feu 1 entre les zones Z, ce qui assure une équipression entre les zones.

En cas d'inondation, puisque chaque volet d'obturation 16 est en position d'ouverture de l'orifice de passage associé 10, l'eau circule entre les deux zones Z, ce qui permet d'éviter un niveau trop élevé dans l'une des zones.

En cas d'incendie, du fait de l'augmentation de la température, le fusible thermique 26 fond ; chaque volet 16 tombe contre l'orifice de passage 10 associé.

Le matériau intumescent du bouchon 19 gonfle, ce qui empêche la propagation du feu.

La grille contribue également à ralentir le feu entre les zones Z, par les couches de matériaux la constituant.

## Revendications

1. Dispositif coupe-feu de traversée d'une paroi (2), notamment pour permettre la traversée de la paroi par un fluide et/ou un câble électrique et/ou un conduit de fluide, le dispositif comprenant un manchon (5) de traversée de paroi muni d'un corps principal (12) et d'un orifice de passage (10), notamment pour le passage de fluide, et/ou câble électrique, et/ou conduit de fluide, ledit manchon (5) étant configuré pour que le corps principal (12) soit logé au moins partiellement dans ladite paroi et l'orifice d'entrée (10) soit disposé hors de la paroi (2), le dispositif coupe-feu (1) comprenant un volet (16) d'obturation de l'orifice de passage (10) par gravité, ledit volet (16) étant monté pivotant entre une position de fermeture de l'orifice de passage (10) et une position d'ouverture de l'orifice de passage (10), le dispositif (1) comprenant un organe de commande (25) de position du volet (16) entre la position d'ouverture et la position de fermeture, l'organe de commande (25) comprenant un élément thermiquement fusible (26) disposé de sorte à maintenir le volet (16) en position d'ouverture, le volet (16) étant pourvu d'un bouchon (19) en matériau intumescent, le bouchon (19) étant disposé de sorte à boucher l'orifice de passage (10) en position de fermeture du volet (16),
dans lequel une extrémité de l'élément thermiquement fusible (26) comprend un trou (27),
dans lequel dans la position d'ouverture une chaine (28) relie le volet (16) à l'élément thermiquement fusible (26) à partir du trou (27).

2. Dispositif coupe-feu selon la revendication 1, comprenant une grille (32) dans le corps principal (12) du manchon (5).

3. Dispositif coupe-feu selon la revendication précédente, dans lequel la grille (32) comprend un revêtement de protection anti-feu.

4. Dispositif coupe-feu selon la revendication précédente, dans lequel le revêtement de protection anti-feu comprend au moins une couche de colle réfractaire, la colle comprenant des éléments actifs capables de libérer de l'eau lors d'une élévation de température.

5. Dispositif coupe-feu selon l'une des revendications 2 à 4, dans lequel la grille (32) comprend au moins une couche de matériau incombustible de type silicate de calcium.

6. Dispositif coupe-feu selon l'une des revendications précédentes, comprenant un support (33) de fixation du dispositif (1) à ladite paroi (2), et une plaque de matériau intumescent formant joint entre le support de fixation du dispositif et ladite paroi.

7. Dispositif coupe-feu selon l'une des revendications précédentes, dans lequel le manchon (5) comprend deux demi-fourreaux (7, 8) séparés par un intervalle (9) pour empêcher la formation d'un pont thermique, l'orifice de passage (10) formant extrémité de l'un des deux demi-fourreaux (7).

8. Dispositif coupe-feu selon la revendication précédente, comprenant un deuxième orifice de sortie (10) formant extrémité de l'autre demi-fourreau (8).

## Patentansprüche

1. Brandschutzvorrichtung zur Durchführung durch eine Wand (2), insbesondere zum Ermöglichen der Durchführung eines Fluids und/oder ein elektrischen Kabels und/oder einer Fluidleitung durch die Wand, wobei die Vorrichtung eine Wanddurchführungshülse (5) umfasst, die mit einem Hauptkörper (12) und einer Durchgangsöffnung (10), insbesondere für den Durchgang von Fluid und/oder eines elektrischen Kabels und/oder einer Fluidleitung, versehen ist, wobei die Hülse (5) so konfiguriert ist, dass der Hauptkörper (12) mindestens teilweise in der Wand untergebracht ist und die Einlassöffnung (10) außerhalb der Wand (2) angeordnet ist, wobei die Brandschutzvorrichtung (1) eine Verschlussklappe (16) für die Durchgangsöffnung (10) durch Schwerkraft umfasst, wobei die Klappe (16) schwenkbar zwischen einer Schließposition der Durchgangsöffnung (10) und einer Öffnungsposition der Durchgangsöffnung (10) montiert ist, wobei die Vorrichtung (1) ein Steuerelement (25) für die Position der Klappe (16) zwischen der Öffnungsposition und der Schließposition umfasst, wobei das Steuerelement (25) ein thermisch schmelzbares Element (26) umfasst, das so angeordnet ist, dass es die Klappe (16) in der Öffnungsposition hält, wobei die Klappe (16) mit einem Stopfen (19) aus intumeszierendem Material ausgestattet ist, wobei der Stopfen (19) so angeordnet ist, dass er in der Schließposition der Klappe (16) die Durchgangsöffnung (10) verschließt,
wobei ein Ende des thermisch schmelzbaren Endes (26) ein Loch (27) umfasst,
wobei in der Öffnungsposition eine Kette (28) die Klappe (16) von dem Loch (27) aus mit dem thermisch schmelzbaren Element (26) verbindet.

2. Brandschutzvorrichtung nach Anspruch 1, die ein Gitter (32) im Hauptkörper (12) der Hülse (5) umfasst.

3. Brandschutzvorrichtung nach dem vorhergehenden Anspruch, wobei das Gitter (32) eine Brandschutzbeschichtung umfasst.

4. Brandschutzvorrichtung nach dem vorhergehenden Anspruch, wobei die Brandschutzbeschichtung mindestens eine Schicht aus feuerfestem Klebstoff umfasst, wobei der Klebstoff aktive Elemente umfasst, die bei einem Temperaturanstieg Wasser freisetzen können.

5. Brandschutzvorrichtung nach einem der Ansprüche 2 bis 4, wobei das Gitter (32) mindestens eine Schicht aus nicht brennbarem Material vom Typ Kalziumsilikat umfasst.

6. Brandschutzvorrichtung nach einem der vorhergehenden Ansprüche, die eine Montagehalterung (33) für die Vorrichtung (1) an der Wand (2) und eine Platte aus intumeszierendem Material umfasst, die eine Dichtung zwischen der Montagehalterung für die Vorrichtung und der Wand bildet.

7. Brandschutzvorrichtung nach einem der vorhergehenden Ansprüche, wobei die Hülse (5) zwei Überzugshälften (7, 8) umfasst, die durch einen Spalt (9) getrennt sind, um die Bildung einer Wärmebrücke zu verhindern, wobei die Durchgangsöffnung (10) das Ende einer der beiden Überzugshälften (7) bildet.

8. Brandschutzvorrichtung nach dem vorhergehenden Anspruch, die eine zweite Austrittsöffnung (10) umfasst, die das Ende der anderen Überzugshälfte (8) bildet.

## Claims

1. A fire stop device passing through a wall (2), in particular to enable a fluid and/or an electrical cable and/or a fluid pipe to pass through the wall, the device comprising a wall-passing sleeve (5) having a main body (12) and a through orifice (10), in particular for the passage of fluid, and/or an electrical cable, and/or a fluid pipe, said sleeve (5) being configured so that the main body (12) is accommodated at least partially in said wall and the inlet orifice (10) is arranged outside the wall (2), the fire stop device (1) comprising a flap (16) for sealing the passage orifice (10) by gravity, said flap (16) being pivotably mounted between a closure position of the passage orifice (10) and an opening position of the passage orifice (10), the device (1) comprising a control member (25) for controlling the position of the flap (16) between the opening position and the closure position, the control member (25) comprising a thermally-fusible element (26) arranged so as to hold the flap (16) in the opening position, the flap (16) being provided with a plug (19) made of an intumescent material, the plug (19) being arranged so as to plug the through orifice (10) in the closure position of the flap (16),
wherein one end of the thermally-fusible element (26) comprises a hole (27),
wherein, in the opening position, a chain (28) connects the flap (16) to the thermally-fusible element (26) through the hole (27).

2. The fire stop device of claim 1, comprising a grill (32) in the main body (12) of the sleeve (5).

3. The fire stop device of the preceding claim, wherein the grill (32) comprises a fireproof protective coating.

4. The fire stop device according to the preceding claim, wherein the fireproof protective coating comprises at least one layer of refractory glue, the glue comprising active elements capable of releasing water upon a rise in temperature.

5. The fire stop device according to any one of claims 2 to 4, wherein the grill (32) comprises at least one layer of incombustible material such as calcium silicate.

6. The fire stop device according to any one of the preceding claims, comprising a support (33) for fastening the device (1) to said wall (2), and a plate made of intumescent material forming a seal between the fastening support of the device and said wall.

7. The fire stop device according to any one of the preceding claims, wherein the sleeve (5) comprises two half-sheaths (7, 8) separated by a gap (9) to prevent the formation of a thermal bridge, the through orifice (10) forming an end of one of the two half-sheaths (7).

8. The fire stop device according to the preceding claim, comprising a second outlet orifice (10) forming an end of the other half-sheath (8).
